# EUROPÄISCHE PATENTANMELDUNG

(11) **EP 2 243 579 A2**
(43) Veröffentlichungstag der Anmeldung: **27.10.2010**
(21) Anmeldenummer: 10158117.1
(22) Anmeldetag: 29.03.2010
(51) Int. Cl.: B23B 39/16, E21D 9/00, G05D 1/02, E21B 7/02, B25H 1/00

(54) **Bohrmodul zur Erstellung von Mehrfachbohrungen in einem Bauteil und mobile Bohrvorrichtungseinheit zur Anordnung auf einem Fahrzeug, insbesondere mit einem derartigen Bohrmodul**

(30) Priorität: 24.04.2009 DE 102009002636
(71) Anmelder: HILTI Aktiengesellschaft, 9494 Schaan (LI)
(72) Erfinder: Bee, Peter, 7307, Jenins (CH); Greisl, Gerhard, 86916, Kaufering (DE)
(74) Vertreter: Söllner, Oliver

(57) **Zusammenfassung**

Die Erfindung betrifft ein Bohrmodul (11) zur Erstellung von Mehrfachbohrungen in einem Bauteil, wobei das Bohrmodul (11) mehrere Bohrgeräte (31) und ein Grundgestell (12) mit einer Verschiebeeinrichtung (21) zum Verschieben der Bohrgeräte (31) in eine erste Richtung (22) umfasst. Die Verschiebeeinrichtung (21) ist derart ausgebildet, dass die Bohrgeräte (31) in eine zweite, von der ersten Richtung (22) verschiedene Richtung (23) verschiebbar an dem Grundgestell (12) anordnenbar sind. Weiter betrifft die Erfindung eine Bohrvorrichtungseinheit zur Anordnung auf einem Fahrzeug.

## Beschreibung

### Technisches Gebiet

Die Erfindung betrifft ein Bohrmodul zur Erstellung von Mehrfachbohrungen in einem Bauteil, der im Oberbegriff des Patentanspruchs 1 genannten Art. Weiter betrifft die Erfindung eine mobile Bohrvorrichtungseinheit zur Anordnung auf einem Fahrzeug, insbesondere mit einem derartigen Bohrmodul.

### Stand der Technik

Verkehrsinfrastrukturen umfassen Bauten, wie beispielsweise Strassen, Gleisanlagen, Brücken, Viadukte, Tunnels und dergleichen, an denen zusätzliche Elemente, wie z. B. Fahrleitungen, Kabelkanäle, Sprinkleranlagen, Geländer oder Brüstungen, angeordnet werden müssen.

Beispielsweise werden bei Betonstrassen als zusätzliche Elemente Querdorne zwischen den seitlich nebeneinanderliegenden Fahrspuren vorgesehen, welche im Betrieb ein ungleichmässiges Setzen der Fahrspuren und somit Höhenunterschiede zwischen den Fahrspuren verhindern. Dazu werden nach dem Erstellen der ersten Fahrspur seitlich mehrere, zueinander beabstandete Bohrungen erstellt, in welche vor dem Erstellen der zweiten Fahrspur die Querdorne eingesetzt werden.

Bei Sanierungen z. B. von Brücken und Viaduktdecken wird oftmals zur Erhöhung der Tragfähigkeit dieses Bauteils auf den bestehenden Altbeton eine Schicht aus Neubeton aufgebracht. Um einen monolithischen Verbund zwischen dem Alt- und Neubeton zu gewährleisten, werden eine Vielzahl von in bestimmten Abständen zueinander beabstandeten Verbindungselementen vorgesehen, welche vor dem Giessen des Neubetons in zuvor im Altbeton erstellten Mehrfachbohrungen verankert werden.

Für die Erstellung von in einer Linie angeordneten, zueinander in einem bestimmten Abstand angeordnete Bohrungen in einem Bauteil ist aus der GB 2 196 276 A ein Bohrmodul bekannt, das mehrere Bohrgeräte und ein Grundgestell mit einer Verschiebeeinrichtung zum Verschieben der Bohrgeräte in eine erste Richtung entlang eines Längsträgers umfasst.

Nachteilig an der bekannten Lösung ist, dass mit diesem Bohrmodul nur Bohrbilder mit in einer Linie angeordneten Bohrungen in einem Bauteil erstellbar sind.

Ein an einem Bauteil, wie eine Brücke oder ein Viadukt, festlegbares Geländer oder Leitplanke weist mehrere, zueinander in zwei Richtungen beabstandete Befestigungspunkte auf, die in gleichmässigen Abständen zueinander angeordnet sind. Zur Befestigung dieser Elemente an einem Bauteil werden daher Mehrfachbohrungen im Bauteil erstellt, deren Bohrbild und Abstände zueinander der Ausgestaltung und Anordnung der Befestigungspunkte des festzulegenden Elementes entsprechen. Um eine einfache Montage der festzulegenden Elemente am Bauteil zu gewährleisten und unnötige Spannungen sowie daraus resultierende Schäden am festzulegenden Element zu vermeiden, ist eine präzise Ausführung der Bohrungen erforderlich.

Zu diesem Zweck ist aus der US 4,915,549 eine mobile Bohrvorrichtungseinheit mit einem Bohrmodul bekannt, die vier zueinander beabstandete, ständergeführte Bohrgeräte aufweist. Jedes Bohrgerät ist über eine Vorschubeinrichtung relativ zum Bauteil verfahrbar. Die Ständer der Bohrgeräte sind an einem Grundgestell vorgesehen, das einen vertikal ausgerichteten Tragrahmen umfasst, der von horizontal und vertikal ausgerichteten Tragelementen mit jeweils zueinander beabstandeten Befestigungsöffnungen zur Festlegung der Bohrgeräte am Grundgestell gebildet ist. Das Grundgestell ist auf einer verfahrbaren Arbeits-Scherenbühne angeordnet. Zwei Bohrgeräte sind jeweils relativ zueinander versetzbar, wobei dazu eine Vielzahl von Befestigungsbolzen gelöst und wieder angezogen werden müssen.

Nachteilig an der bekannten Lösung ist, dass die Bohrgeräte nur in einem vorbestimmten Raster zueinander versetzt werden können, der durch den Abstand der Befestigungsöffnungen jeweils in den horizontal und vertikal ausgerichteten Tragelementen bestimmt ist. Um den Abstand der Bohrgeräte zueinander sowohl in eine erste Richtung wie auch in eine zweite, von der ersten Richtung verschiedene Richtung zu verändern, müssen z. B. zuerst die übereinander angeordneten Bohrgeräte zueinander versetzt und anschliessend die vertikalen, mit den zuvor zueinander versetzten Bohrgeräte tragenden Tragelemente relativ zueinander in die zweite Richtung versetzt werden, womit der Aufwand zur Ausrichtung der Bohrgeräte zueinander zeitintensiv sowie arbeitsintensiv ist.

Weiter nachteilig an der bekannten Lösung ist, dass diese mobile Bohrvorrichtungseinheit nur mit speziell ausgebildeten Befestigungseinrichtungen auf einem Fahrzeug, wie z. B. auf einem Lastwagen, auf einem Bahnwagen oder auf einem Schiff angeordnet werden kann.

### Darstellung der Erfindung

Aufgabe der Erfindung ist es, ein Bohrmodul zu schaffen, bei dem der Abstand der Bohrgeräte einfach und flexibel anpassbar ist. Weiter ist es die Aufgabe der Erfindung, eine mobile Bohrvorrichtungseinheit zur Anordnung auf einem Fahrzeug zu schaffen, die einfach auf dem Fahrzeug anordnenbar ist.

Die Aufgaben sind durch die Merkmale der unabhängigen Ansprüche gelöst. Vorteilhafte Weiterbildungen sind in den Unteransprüchen dargelegt.

Gemäss der Erfindung ist die Verschiebeeinrichtung derart ausgebildet, dass zumindest ein Bohrgerät in eine zweite, von der ersten Richtung verschiedene Richtung verschiebbar an dem Grundgestell anordnenbar ist.

Aufgrund der Verschiebbarkeit zumindest eines der Bohrgeräte in beide Richtungen lassen sich in einer einfachen Art und Weise unterschiedliche Bohrbilder mit einem Typ von Bohrmodul in einem Bauteil in einfacher Art und Weise erstellen. Verschieblich heisst in diesem Zusammenhang, dass die Bewegung kontinuierlich erfolgt und somit die Positionierung des Zumindest einen Bohrgerätes zwischen den vorgegebenen Endpunkten nicht an ein vorgegebenes Raster gebunden ist. Nachdem das oder die Bohrgräte in der gewünschten Position zueinander ausgerichtet sind, werden diese über eine Verspanneinrichtung, wie z. B. eine Spannschraube an dem Grundgestell fixiert.

Vorzugsweise ermöglicht die Verschiebeeinrichtung eine Verschiebung zumindest eines Bohrgerätes sowohl in die erste Richtung wie auch in die zweite Richtung, womit die Verschiebeeinrichtung einteilig ausgebildet werden kann. Vorteilhaft umfasst die Verschiebeeinrichtung als ein Verschiebeelement eine Führungskulisse, entlang welcher das zumindest eine Bohrgerät geführt verschiebbar ist. Die Führungskulisse verläuft für eine einfache Verschiebbarkeit des zumindest einen Bohrgerätes vorteilhaft gerade. Alternativ weist die Führungskulisse einen kurvigen oder diskontinuierlichen Verlauf auf.

Bevorzugt erfolgt die Verschiebung in beide Richtungen überlagert, wobei das zumindest eine Bohrgerät vorteilhaft gleichzeitig in die erste und die zweite Richtung verschiebbar ist. Umfasst die Verschiebeeinrichtung als Verschiebeelement eine Führungskulisse, entlang welcher das zumindest eine Bohrgerät geführt verschiebbar ist, verläuft diese Kulisse vorteilhaft in der von den beiden Richtungen aufgespannten Ebene und in einem Winkel zu der ersten Richtung wie auch zu der zweiten Richtung.

Alternativ verläuft die Führungskulisse zuerst in eine Richtung und dann in die andere Richtung, wobei die Abzweigung von der einen Richtung in die andere Richtung auch zwischen den Endpunkten der in die eine Richtung verlaufenden Führungskulisse vorgesehen sein kann.

Vorzugsweise umfasst die Verschiebeeinrichtung ein erstes Verschiebeelement zum Verschieben zumindest eines Bohrgerätes in die erste Richtung und ein zweites Verschiebeelement zum Verschieben des zumindest einen Bohrgerätes in die zweite Richtung, womit die Verschiebeeinrichtung mehrteilig ausgebildet sein kann. Dabei kann jedes der Verschiebeelemente nur in eine Richtung oder zumindest eines der Verschiebeelemente auch in beide Richtungen verschiebbar an dem Grundgestell angeordnet sein.

Vorteilhaft weist das Bohrmodul parallel zur Bohrachse der Bohrgeräte verlaufende Anlagestützen auf, welche nach der Ausrichtung des Bohrmoduls am Untergrund an diesem anliegen und besonders vorteilhaft zumindest in jedem der Ecken des Grundgestells vorgesehen sind. Weiter vorteilhaft sind die Anlagestützen mehrteilig sowie teleskopartig ausgebildet, wobei vorteilhaft zumindest ein Teil der mehrteiligen Anlagestütze in Richtung des freien Endes der Anlagestütze federbeaufschlagt ist. Dadurch liegen die Anlagestützen auch bei gekrümmt verlaufenden Oberflächen, wie z. B. an Tunnelgewölben, vollständig an dem Untergrund an.

Weiter vorteilhaft weist das Bohrmodul einen parallel zur Bohrachse der Bohrgeräte verlaufenden Zentrierstab auf, welcher auf einen Markierpunkt zur korrekten Ausrichtung des Bohrmoduls am Untergrund gerichtet wird und somit die präzise Erstellung der Bohrungen im Bauteil sicherstellt. Vorteilhaft ist der Zentrierstab im Mittelpunkt des zu erstellenden Bohrbildes, zwischen den Bohrgeräten vorgesehen. Besonders vorteilhaft ist der Zentrierstab mehrteilig sowie teleskopartig ausgebildet, wobei zumindest ein Teil des mehrteiligen Zentrierstabs in Richtung des freien Endes des Zentrierstabs federbeaufschlagt ist. Dadurch passt sich der Zentrierstab beim Ansetzen des Bohrmoduls am Untergrund in der Länge an.

Gemäss der Erfindung umfasst eine mobile Bohrvorrichtungseinheit zur Anordnung auf einem Fahrzeug, das zumindest eine Befestigungseinrichtung zur Fixierung zumindest einer genormten Plattform aufweist, und zur Erstellung von Mehrfachbohrungen in einem Bauteil eine Bohrvorrichtung, die eine Hebeeinrichtung und ein Bohrmodul aufweist, wobei die Bohrvorrichtung auf der genormten Plattform angeordnet und mit der Befestigungseinrichtung des Fahrzeugs auf diesem fixierbar ist.

Im weltweiten Warenverkehr haben sich so genannte Container als Transportmittel durchgesetzt, welche eine genormte Plattform aufweisen und daher auf verschiedene Arten von Fahrzeugen, wie z. B. Lastwagen, Bahnwagen oder Schiffen, mit der Befestigungseinrichtung des Fahrzeugs auf diesem fixierbar sind.

Da die Bohrvorrichtung auf der genormten Plattform angeordnet ist, kann die bereits am Fahrzeug vorgesehene Befestigungseinrichtung für deren Fixierung verwendet werden. Somit ist die Bohrvorrichtungseinheit flexibel auf der Strasse, der Schiene wie auch auf Wasserwegen einsetzbar. Die Bohrvorrichtung ist vorteilhaft lösbar auf der genormten Plattform angeordnet.

Die Hebeeinrichtung ist z. B. ein Kranarm, eine Hebebühne oder dergleichen, und weist weiter vorteilhaft einen Anschlusskopf für das Bohrmodul auf, der Rotationen in drei unterschiedlichen Richtungen ermöglicht. Weiter vorteilhaft ist an der Hebeeinrichtung eine Bedienerplattform mit einer Steuereinheit zum Steuern der Bohrvorrichtung und/oder der Bohrvorrichtungseinheit vorgesehen. Die Hebeeinrichtung, insbesondere in Form eines Kranarms, ermöglicht z. B. bei einem Doppelspur-Eisenbahntunnel auch das Arbeiten an der Nebenspur, so dass ein effizientes und flexibles Arbeiten mit der Bohrvorrichtungseinheit gewährleistet ist.

Vorteilhaft ist die genormte Plattform ein Containerrahmen eines 10 Fuss-Containers, welcher auf die üblichen Container-Lastwagen, Container-Bahnwagen oder ContainerSchiffen einfach fixierbar ist. Diese genormte Plattform kann neben Normalspur-Bahnwagen auch auf Schmalspur-Bahnwagen fixiert werden.

Vorzugsweise umfasst die Bohrvorrichtungseinheit eine Versorgungseinheit und/oder Entsorgungseinheit, die auf einer genormten Plattform angeordnet sind, wobei die Versorgungseinheit und/oder Entsorgungseinheit auf derselben oder auf einer separaten genormten Plattform angeordnet sind. Ist die genormte Plattform ein Containerrahmen eines 10 Fuss-Containers und sind die Versorgungseinheit und/oder Entsorgungseinheit auf einer von der genormten Plattform der Bohrvorrichtungseinheit separaten genormten Plattform angeordnet, so können diese beiden genormten Plattformen hintereinander auf einem herkömmlichen Container-Lastwagen, Container-Bahnwagen oder Container-Schiff angeordnet werden. Vorteilhaft sind die Versorgungseinheit und die Entsorgungseinheit auf einer gemeinsamen genormten Plattform angeordnet. Alternativ sind die Versorgungseinheit und die Entsorgungseinheit auf separaten genormten Plattformen vorgesehen, womit eine noch flexiblere Modularität der Bohrvorrichtungseinheit gegeben ist. Weiter können die Versorgungseinheit und die Entsorgungseinheit auf separaten Plattformen angeordnet, die ihrerseits bedarfsweise auf einer genormten Plattform angeordnet werden können.

Die Versorgungseinheit umfasst beispielsweise einen Generator zur Stromerzeugung, einen Kompressor zur Erzeugung von Druckluft, einen Elektroverteiler zur Verteilung der elektrischen Energie und/oder einen Frischwassertank mit einer Pumpe zur Verfügungstellung von Spülwasser zur Unterstützung des Bohrvorgangs und Reinigungswasser. Weiter vorteilhaft umfasst die Versorgungseinheit Beleuchtungsmittel, mit denen der Arbeitsort ausreichend beleuchtet werden kann.

Die Entsorgungseinheit umfasst beispielsweise eine Saugeinrichtung zur Absaugung von Bohrmehl und Bohrklein, einen Auffangbehälter z. B. für das anfallende Bohrmehl und Bohrklein, einen Brauchwassertank zur Aufnahme des anfallenden Brauchwassers und/oder ein Recyclinggerät, mit dem man z. B. das anfallende Brauchwasser für eine weitere Verwendung vor Ort aufbereiten kann.

Bevorzugt umfasst die Bohrvorrichtungseinheit eine Antriebseinheit zur Verschiebung der auf dem Fahrzeug fixierten Bohrvorrichtung, womit das Fahrzeug, insbesondere ein Bahnwagen, autark verschiebbar ist. Vorteilhaft weist die Antriebseinheit einen Motor auf, der weiter vorteilhaft von der Versorgungseinheit mit der notwendigen Energie zum Betrieb versorgt wird. Besonders bei einem Bahnwagen als Fahrzeug für die mobile Bohrvorrichtungseinheit ist eine separate Antriebseinheit vorteilhaft, da somit auf eine von einem Spezialisten gesteuerte Lokomotive zum Verschieben des Bahnwagens von Arbeitsstelle zu Arbeitsstelle verzichtet werden kann. Vorteilhaft ist für die Antriebseinheit eine separate Hebeeinrichtung vorgesehen, womit die Antriebseinheit bedarfsweise auf den Boden absenkbar beziehungsweise auf das Fahrzeug aufladbar ist.

Vorzugsweise weist die Bohrvorrichtung eine Stützeinrichtung auf, welche nach Erreichen des gewünschten Arbeitsortes eine Abstützung der Bohrvorrichtungseinheit am Untergrund ermöglicht und somit ein Kippen des Fahrzeugs mit der daran fixierten Bohrvorrichtungseinheit im Betrieb derselben verhindert.

Bevorzugt umfasst die Bohrvorrichtungseinheit eine Messvorrichtung mit einer ersten Strahlquelle zur Erzeugung eines ersten Messstrahls und mit einer zweiten Strahlquelle zur Erzeugung eines zweiten Messstrahls, wobei der von dem ersten Messstrahl und dem zweiten Messstrahl gebildete Schnittpunkt einen Markierpunkt zur Ausrichtung des Bohrmoduls bildet. Die Strahlquellen sind vorteilhaft als Linienlaser ausgebildet und erlauben eine exakte Ausrichtung des Bohrmoduls zum Untergrund für eine präzise Erstellung der Bohrungen.

Vorzugsweise ist zumindest eine der Strahlquellen relativ zur genormten Plattform verschiebbar an der genormten Plattform angeordnet und kann entsprechend dem anzuzeigenden Markierpunkt an der genormten Plattform ausgerichtet werden. Die zweite Strahlquelle kann ebenfalls an der genormten Plattform angeordnet werden oder wird beabstandet zu dieser vorgesehen. Ist die zweite Strahlquelle beabstandet zu der genormten Plattform angeordnet, so wird diese vorteilhaft auf einer separaten Einheit vorgesehen, welche ihrerseits verfahrbar beziehungsweise versetzbar ist. Bei einem Schienenweg ist die zweite Strahlquelle beispielsweise auf einem auf die Spurbreite der Schienen abgestimmten Wagen, vorteilhaft lösbar angeordnet.

### Kurze Beschreibung der Zeichnungen

Die Erfindung wird nachstehend anhand von Ausführungsbeispielen näher erläutert. Es zeigen:
- Fig. 1: Ein Bohrmodul in perspektivischer Ansicht;
- Fig. 2: ein Bohrmodul mit einer alternativen Verschiebeeinrichtung im Grundriss;
- Fig. 3: ein erstes Ausführungsbeispiel einer mobilen Bohrvorrichtungseinheit in perspektivischer Ansicht;

- Fig. 4: ein Detailschnitt durch die Führungseinrichtung für die erste Strahlenquelle gem. Linie III-III in Fig. 3;
- Fig. 5: ein zweites Ausführungsbeispiel einer mobilen Bohrvorrichtungseinheit in perspektivischer Ansicht; und
- Fig. 6: ein drittes Ausführungsbeispiel einer mobilen Bohrvorrichtungseinheit in perspektivischer Ansicht.

Grundsätzlich sind in den Figuren gleiche Teile mit den gleichen Bezugszeichen versehen.

### Wege zur Ausführung der Erfindung

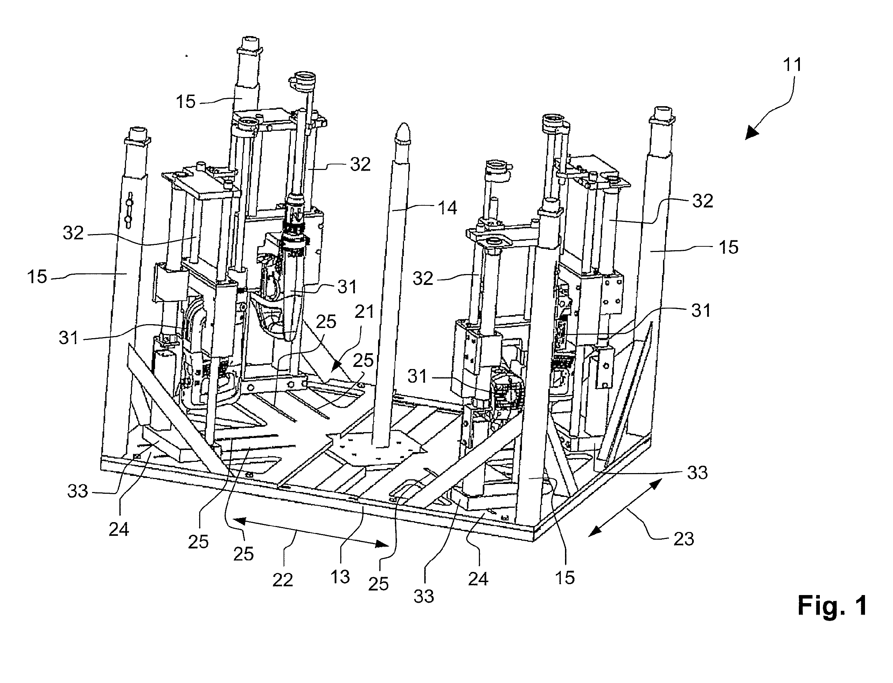

Das in der Figur 1 dargestellte Bohrmodul 11 zur Erstellung von Mehrfachbohrungen in einem Bauteil umfasst vier Bohrgeräte 31, hier Diamantbohrgeräte mit einer drehangetrieben Kernbohrkrone als Werkzeug, und ein Grundgestell 12 mit einer Verschiebeeinrichtung 21 zum Verschieben der Bohrgeräte 31 in eine erste Richtung 22 und in eine zweite, von der ersten Richtung 22 verschiedene Richtung 23. Die Bohrgeräte 31 sind jeweils an einem Ständer 32 geführt und z. B. über eine elektrische oder pneumatische Vorschubeinrichtung relativ zum Bauteil verfahrbar. Die Bohrgeräte 31 sind jeweils an einem Schlitten lösbar festgelegt, der entlang des Ständers 32 von der Vorschubeinrichtung für einen Vorschub zum Bauteil hin und für ein Zurückfahren der Bohrgeräte 31 in eine Ausgangsstellung von dem Bauteil weg bewegbar ist.

Das Grundgestell 12 weist einen Basisrahmen 13 auf, der eine sich in die erste Richtung 22 und in die senkrecht zur ersten Richtung 22 verlaufende zweite Richtung 23 erstreckt. Im Mittelpunkt des Basisrahmens 13 ist ein senkrecht zu der von dem Basisrahmen 13 aufgespannten Ebene abragender Zentrierstift 14 vorgesehen, der mehrteilig sowie teleskopartig ausgebildet ist. Der am freien Ende vorgesehene Teil des Zentrierstift 14 ist in Richtung des freien Endes über ein innenliegendes, hier nicht dargestelltes Federelement federbeaufschlagt.

Die Verschiebeeinrichtung 21 umfasst als ein Verschiebeelement eine zweiteilige Basisplatte 24, deren Teile in die erste Richtung 22 relativ zueinander verschiebbar an dem Basisrahmen 13 angeordnet sind. In den Teilen der Basisplatte 24 sind für jeden Ständer 32 zwei parallel zueinander sowie in einem Winkel zu der ersten Richtung 22 und der zweiten Richtung 23 gerade verlaufende Führungskulissen 25 vorgesehen, womit die Verschiebeeinrichtung 21 eine Verschiebung der Bohrgeräte 31 sowohl in die erste Richtung 22 wie auch in die zweite Richtung 23 ermöglicht. Die Verschiebung erfolgt somit überlagert beziehungsweise gleichzeitig in beide Richtungen 22 und 23.

Die Ständer 32 weisen jeweils eine Fussplatte 33 auf, von der hier nicht dargestellte, die Führungskulissen 25 durchdringende Befestigungsbolzen abragen, über welche z. B. in Kombination mit Spannmuttern der Ständer 32 und somit das entsprechende Bohrgerät 31 am Grundgestell 12 festlegbar ist.

In den beiden aussenliegenden Eckpunkten der Basisplatten 24 ist jeweils eine senkrecht zu der von dem Basisrahmen 13 aufgespannten Ebene abragende Anlagestütze 15 vorgesehen, die mehrteilig sowie teleskopartig ausgebildet ist. Der am freien Ende vorgesehene Teil der Anlagestütze 15 ist in Richtung des freien Endes über ein innenliegendes, hier nicht dargestelltes Federelement federbeaufschlagt.

Zum Einstellen des gewünschten Bohrbildes werden die Verspannung der entsprechenden Ständer 32 gelöst, diese mit den Bohrgeräten 31 in die entsprechende Position verschoben und anschliessend wieder fixiert. Die Verschiebung ein jedes Ständers 32 ist von jeglichem Raster unabhängig und in einem ersten Schritt nur durch die Endpunkte der Führungskulissen 25 begrenzt. Um die Bohrgeräte 31 noch über einen grösseren Bereich relativ zueinander positionieren zu können, werden die hier nicht näher dargestellten Fixierungen der Teile der Basisplatte 24 gelöst und diese zueinander in die gewünschte Position verschoben sowie anschliessend wieder am Basisrahmen 13 fixiert.

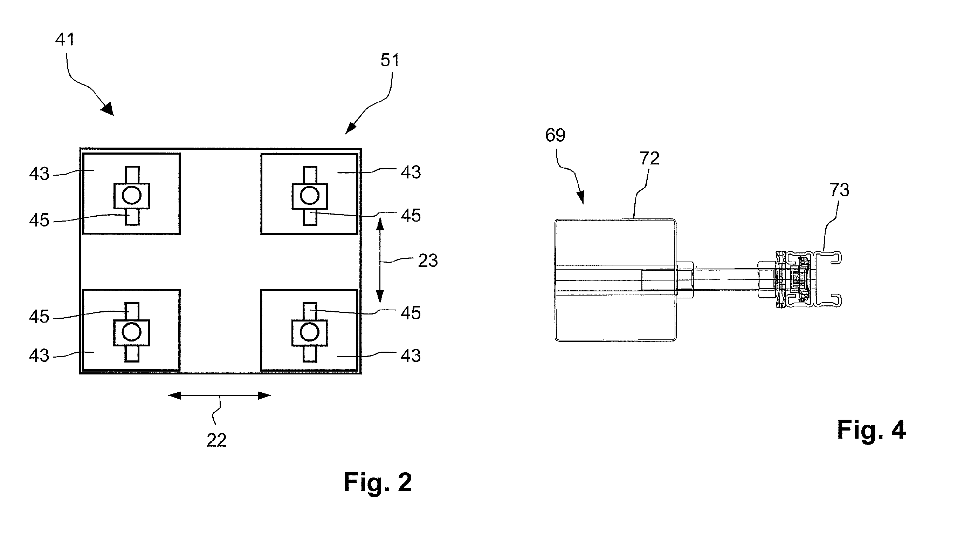

In Figur 2 ist ein Bohrmodul 41 mit einer vierteiligen Basisplatte 43 gezeigt, deren Teile als erstes Verschiebeelement der Verschiebeeinrichtung 51 ein Verschieben eines Bohrgerätes in eine erste Richtung 22 und/oder in eine zweite Richtung erlaubt. In jedem Teil der Basisplatte 43 ist jeweils eine gerade, in Richtung der zweiten Richtung 23 verlaufende Führungskulisse 45 vorgesehen, die ein zweites Verschiebeelement der Verschiebeeinrichtung 51 zum Verschieben eines Bohrgerätes in die zweite Richtung 23 ausbilden. Alternativ kann die Führungskulisse 45 auch in Richtung der ersten Richtung 22 verlaufend angeordnet sein. Weiter können auch mehrere sich kreuzende, in mehreren Richtungen verlaufende Führungskulissen an den Teilen der mehrteiligen Basisplatte vorgesehen sein, womit eine Vielzahl von Positioniermöglichkeiten der Bohrgeräte relativ zueinander gegeben sind.

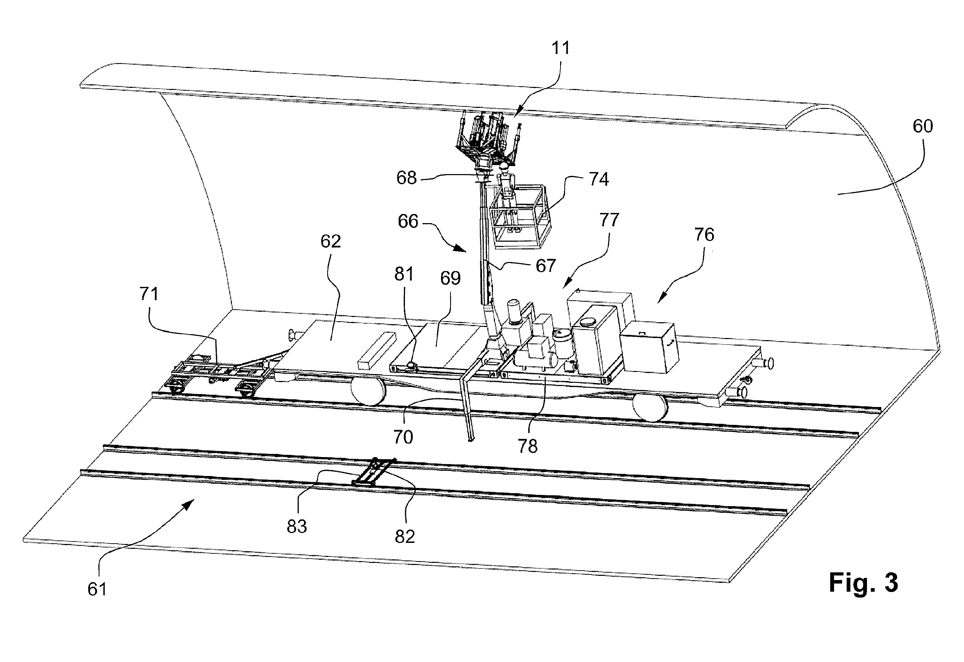

In der Figur 3 ist eine mobile Bohrvorrichtungseinheit 61 zur Erstellung von Mehrfachbohrungen in einer Tunnelwandung als Bauteil 60 dargestellt, die auf einem Bahnwagen als Fahrzeug 62 angeordnet ist. Die Bohrvorrichtungseinheit 61 umfasst eine Bohrvorrichtung 66, die als Hebeeinrichtung 67 einen Kranarm aufweist, an dessen freien Ende über einen in drei Dimensionen rotierbarer Kopf 68 ein Bohrmodul 11 vorgesehen ist. An der Hebeeinrichtung 67 ist weiter eine Bedienplattform 74 mit einem Steuerpult vorgesehen, über welche ein Bediener die Bohrvorrichtung 66 sowie die Bohrvorrichtungseinheit 61 steuern kann.

Die Bohrvorrichtung 66 ist auf einer genormten Plattform 69 angeordnet und mit einer auf diese genormte Plattform 69 abgestimmte Befestigungseinrichtung des Fahrzeugs 62 an diesem fixierbar. Die genormte Plattform 69 ist ein Containerrahmen eines 10 Fuss-Containers. Die Bohrvorrichtung 66 weist zudem eine Stützeinrichtung 70 auf, welche ein Kippen des Fahrzeugs 62 beim Anheben, Senken und Verfahren der Hebeeinrichtung 67 verhindert.

Weiter umfasst die Bohrvorrichtungseinheit 61 eine von dem Fahrzeug 62 absenkbare Antriebseinheit 71, welche ein Verschieben des Fahrzeugs 62 mit der darauf fixierten Bohrvorrichtung 66 ohne den Einsatz z. B. einer Lokomotive ermöglicht.

Die Bohrvorrichtungseinheit 61 umfasst zudem eine Versorgungseinheit 76 zum Versorgen der Bohrvorrichtung 66 mit Energie sowie Betriebsmittel und weist eine Entsorgungseinheit 77 zur Aufnahme von anfallendem Bohrmehl beziehungsweise Bohrklein und Brauchwasser auf. Die Versorgungseinheit 76 und die Entsorgungseinheit 77 sind auf einer separaten genormten Plattform 78 angeordnet. Die genormte Plattform 78 ist vorteilhaft ebenfalls ein Containerrahmen eines 10 Fuss-Containers, womit diese genormte Plattform 78 und die genormte Plattform 69 der Bohrvorrichtung 66 hintereinander auf einem herkömmlichen Fahrzeug 62 für den Transport von Containern mit den bereits an diesem vorgesehenen Befestigungseinrichtung fixierbar sind.

Weiter umfasst die Bohrvorrichtungseinheit 61 eine Messvorrichtung mit zwei Linienlasern als erste Strahlquelle 81 und zweite Strahlquelle 82. Der Schnittpunkt der Messstrahlen dieser Strahlquellen 81 und 82 bildet an der Tunnelwandung einen Markierpunkt zur Ausrichtung des Bohrmoduls 11.

Die erste Strahlquelle 81 ist relativ zur genormten Plattform 69 verschiebbar an der genormten Plattform 69 angeordnet. Wie in der Figur 4 gezeigt, ist zu diesem Zweck beabstandet zu einem Rahmenprofil 72 der genormten Plattform 69 eine parallel zu diesem verlaufende Montageschiene 73 vorgesehen, an welcher mit entsprechend ausgebildeten Anbindeteilen der Linienlaser als erste Strahlquelle 81 entlang der Montageschiene 73 beliebig festlegbar ist.

Der zweite Linienlaser als zweite Strahlquelle 82 ist auf einem Trolley 83 vorgesehen, der eine auf die Schienen abgestimmte Spurweite aufweist. Vorteilhaft kann die Spurweite des Trolleys 83 beziehungsweise des Wagens auf Schmalspur und Normalspur angepasst werden.

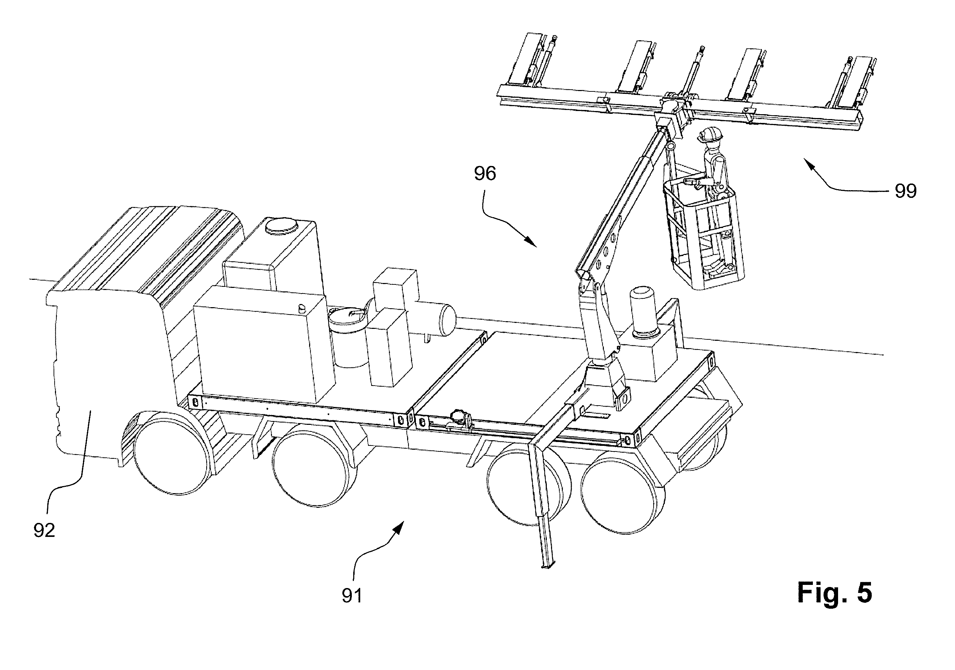

Die in Figur 5 gezeigte mobile Bohrvorrichtungseinheit 91 ist im Wesentlichen wie die zuvor beschriebene Bohrvorrichtungseinheit 61 ausgebildet, jedoch auf einem für den Containertransport ausgebildeten Lastwagen als Fahrzeug 92 fixiert. Als weiterer Unterschied weist die Bohrvorrichtung 96 der Bohrvorrichtungseinheit 91 ein Bohrmodul 99 auf, mit dem in einer Linie liegende Mehrfachbohrungen in einer Tunnelwandung als Bauteil 90 erstellt werden können.

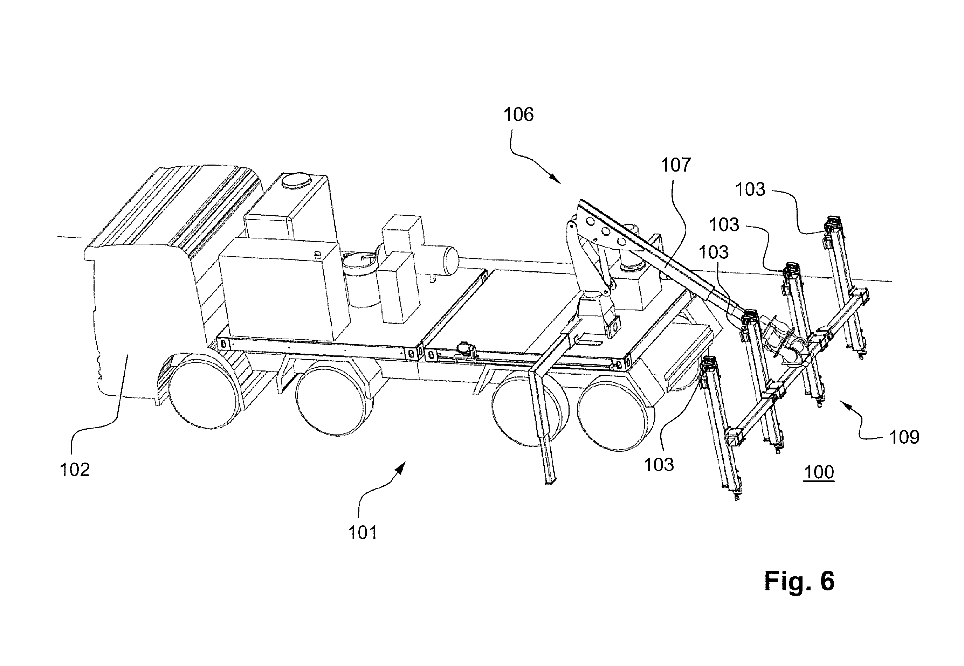

Die in Figur 6 gezeigte mobile Bohrvorrichtungseinheit 101 ist im Wesentlichen wie die zuvor beschriebene Bohrvorrichtungseinheit 91 ausgebildet und ebenfalls auf einem Lastwagen als Fahrzeug 92 fixiert. Im Gegensatz zu der Bohrvorrichtungseinheit 91 ist das hier gezeigte Bohrmodul 109 für die Erstellung von in einer Linie liegenden Mehrfachbohrungen im Boden als Bauteil 100 ausgebildet. Das Bohrmodul 109 umfasst als Bohrgeräte 103 Bohrhämmer. Bei dieser Bohrvorrichtung 106 erfolgt die Steuerung vom Boden oder direkt von dem Fahrzeug 102 aus, womit keine separate Bedienerplattform an der Hebeeinrichtung 107 vorgesehen sein muss.

Die mobilen Bohrvorrichtungseinheiten 61, 91 und 101 zeichnen sich durch ihre Modularität aus. Basisteile der Bohrvorrichtungseinheiten 61, 91 und 101 bilden die genormten Plattformen 69 und 78 mit den darauf angeordneten Elementen. Der Anwender ordnet je nach Anwendung das entsprechende Bohrmodul 11, 96 oder 106 an der Hebeeinrichtung 67 oder 107 an und fixiert die Bohrvorrichtung 66, 96 und 106 auf dem gewünschten Fahrzeug 62, 92, 102. Da die Plattformen 69 und 78 vorteilhaft genormte Containerrahmen sind, lassen sich die Bohrvorrichtungseinheiten 61, 91 und 101 modular und einfach an verschiedenen, für den Transport von Containern geeigneten Fahrzeugen 62, 92 und 102 fixieren.

## Patentansprüche

1. Bohrmodul zur Erstellung von Mehrfachbohrungen in einem Bauteil, wobei das Bohrmodul (11; 41) mehrere Bohrgeräte (31) und ein Grundgestell (12) mit einer Verschiebeeinrichtung (21; 51) zum Verschieben der Bohrgeräte (31) in eine erste Richtung (22) umfasst, **dadurch gekennzeichnet, dass**
die Verschiebeeinrichtung (21; 51) derart ausgebildet ist, dass zumindest ein Bohrgerät (31) in eine zweite, von der ersten Richtung (22) verschiedene Richtung (23) verschiebbar an dem Grundgestell (12) anordnenbar ist.

2. Bohrmodul nach Anspruch 1, **dadurch gekennzeichnet, dass** die Verschiebeeinrichtung (21; 51) eine Verschiebung zumindest eines Bohrgerätes (31) sowohl in die erste Richtung (22) wie auch in die zweite Richtung (23) ermöglicht.

3. Bohrmodul nach Anspruch 2, **dadurch gekennzeichnet, dass** die Verschiebung in beide Richtungen (22; 23) überlagert erfolgt.

4. Bohrmodul nach einem der Ansprüche 1 bis 3, **dadurch gekennzeichnet, dass** die Verschiebeeinrichtung (51) ein erstes Verschiebeelement (43) zum Verschieben zumindest eines Bohrgerätes in die erste Richtung (22) und ein zweites Verschiebeelement (45) zum Verschieben des zumindest einen Bohrgerätes in die zweite Richtung (23) umfasst.

5. Mobile Bohrvorrichtungseinheit zur Anordnung auf einem Fahrzeug (62; 92; 102), das zumindest eine Befestigungseinrichtung zur Fixierung zumindest einer genormten Plattform (69; 78) aufweist, und zur Erstellung von Mehrfachbohrungen in einem Bauteil (60; 90; 100), wobei die Bohrvorrichtungseinheit (61; 91; 101) eine Bohrvorrichtung (66; 96; 106) umfasst, die eine Hebeeinrichtung (67; 107) und ein Bohrmodul (11; 99; 109), insbesondere ein Bohrmodul (11) nach einem der Ansprüche 1 bis 4, aufweist, wobei die Bohrvorrichtung (66; 96; 106) auf der genormten Plattform (69; 78) angeordnet und mit der Befestigungseinrichtung des Fahrzeugs (62; 92; 102) auf diesem fixierbar ist.

6. Bohrvorrichtungseinheit nach Anspruch 5, **dadurch gekennzeichnet, dass** die Bohrvorrichtungseinheit (61; 91; 101) eine Versorgungseinheit (76) und/oder Entsorgungseinheit (77) umfasst, die auf einer genormten Plattform (78) angeordnet sind, wobei die Versorgungseinheit (76) und/oder Entsorgungseinheit (77) auf derselben oder auf einer separaten genormten Plattform (78) angeordnet sind.

7. Bohrvorrichtungseinheit nach Anspruch 5 oder 6, **dadurch gekennzeichnet, dass** die Bohrvorrichtungseinheit (61) eine Antriebseinheit (71) zur Verschiebung der auf dem Fahrzeug (62) fixierten Bohrvorrichtung (66) umfasst.

8. Bohrvorrichtungseinheit nach einem der Ansprüche 5 bis 7, **dadurch gekennzeichnet, dass** die Bohrvorrichtung (66; 96; 106) eine Stützeinrichtung (70) aufweist.

9. Bohrvorrichtungseinheit nach einem der Ansprüche 5 bis 8, **dadurch gekennzeichnet, dass** die Bohrvorrichtungseinheit (61) eine Messvorrichtung mit einer ersten Strahlquelle (81) zur Erzeugung eines ersten Messstrahls und mit einer zweiten Strahlquelle (82) zur Erzeugung eines zweiten Messstrahls umfasst, wobei der von dem ersten Messstrahl und dem zweiten Messstrahl gebildete Schnittpunkt einen Markierpunkt zur Ausrichtung des Bohrmoduls (11) bildet.

10. Bohrvorrichtungseinheit nach Anspruch 9, **dadurch gekennzeichnet, dass** zumindest eine der Strahlquellen (81) relativ zur genormten Plattform (69) verschiebbar an der genormten Plattform (69) angeordnet ist.
